# FASCICULE DE BREVET EUROPEEN

(11) **EP 4 605 355 B1**
(45) Date de publication et mention de la délivrance du brevet: **19.08.2026**
(21) Numéro de dépôt: 23809702.6
(22) Date de dépôt: 17.10.2023
(51) Int. Cl.: C04B 35/577, C04B 35/565, C04B 35/573, C04B 35/628, C04B 35/80, C04B 35/63

(54) **PROCEDE DE FABRICATION D'UNE PIECE EN MATERIAU COMPOSITE A MATRICE CERAMIQUE**
VERFAHREN ZUR HERSTELLUNG EINES TEILS AUS EINEM VERBUNDSTOFF MIT EINER KERAMIKMATRIX
PROCESS FOR MANUFACTURING PART MADE OF A COMPOSITE MATERIAL HAVING A CERAMIC MATRIX

(30) Priorité: 21.10.2022 FR 2210904
(43) Date de publication de la demande: 27.08.2025
(73) Titulaire: Safran Ceramics, 33185 Le Haillan (FR); Centre National de la Recherche Scientifique, 75016 Paris (FR); UNIVERSITE DE BORDEAUX, 33000 Bordeaux (FR)
(72) Inventeur: BOUILLON, Eric, 77550 MOISSY-CRAMAYEL (FR); PLAISANTIN, Hervé, 77550 MOISSY-CRAMAYEL (FR); BERTRAND, Nathalie, Dominique, 33490 SAINT-MAIXANT (FR); EL MANSOURI, Amine, 33000 BORDEAUX (FR); GUETTE, Alain, Jean-Michel, 33110 LE BOUSCAT (FR)
(74) Mandataire: Cabinet Beau de Loménie
(86) Numéro de dépôt international: PCT/FR2023/051614
(87) Numéro de publication internationale: WO 2024/084161

(56) Documents cités:
- FR-A1- 3 047 988
- FR-A1- 3 098 513
- FR-A1- 3 115 533
- US-A1- 2004 191 411
- EL MANSOURI AMINE: "DEVELOPPEMENT DE LA TECHNOLOGIE CVD A LIT FLUIDISÉ POUR L'ENROBAGE DE POUDRES CERAMIQUES PAR DU PYROCARBONE", 26 February 2021 (2021-02-26), pages 1 - 227, XP093041553, Retrieved from the Internet <URL:https://www.theses.fr/2021BORD0052> [retrieved on 20230424]

## Description

### Domaine Technique

L'invention concerne la fabrication d'une pièce en matériau composite à matrice en céramique (« Ceramic Matrix Composite » ; « CMC ») durant laquelle la matrice céramique est formée par infiltration d'une composition à base de silicium fondu (« Melt-Infiltration » ; « MI »). L'invention propose la présence d'une composition pulvérulente fonctionnalisée permettant de protéger le carbure de silicium de pré-densification de l'attaque par le silicium fondu. La pièce en matériau composite ainsi obtenue peut trouver une application en tant que pièce de partie chaude de turbomachine, notamment de turbomachine aéronautique, telle qu'une pièce de turbine.

### Technique antérieure

Les matériaux composites à matrice céramique supportent des températures allant de 600°C à 1400°C. De par leur meilleure résistance aux hautes températures, les CMC nécessitent moins de refroidissement. Ce refroidissement étant traditionnellement issu d'un prélèvement dans le compresseur qui impacte le rendement de la turbomachine, les matériaux CMC permettent donc d'améliorer le rendement moteur ce qui réduit la consommation de carburant. Par ailleurs, leur utilisation contribue à optimiser les performances des turbomachines notamment par la baisse de la masse globale de la turbomachine qui contribue encore à une diminution de la consommation de carburant et donc à la réduction significative des émissions polluantes.

Les pièces en CMC peuvent être formées par infiltration à l'état fondu. Dans cette technique, une composition de silicium fondu peut être introduite dans la porosité d'une structure fibreuse pré-densifiée par un dépôt de carbure de silicium et chargée par des particules de carbure de silicium. Cette méthode permet d'obtenir une matrice Si-SiC totalement dense de haut module et un composite à haute limite de linéarité.

La thèse "DEVELOPPEMENT DE LA TECHNOLOGIE CVD A LIT FLUIDISÉ POUR L'ENROBAGE DE POUDRES CERAMIQUES PAR DU PYROCARBONE" de Amine El Mansouri, soutenue le 26 février 2021, décrit l'enrobage de particules de SiC avec une couche de PyC déposée par CVD en lit fluidisé et divulgue leur utilisation pour former des matrices céramiques pour matériaux composites et mentionne une "voie mixte" combinant voies liquides et gazeuses, i.e. : "slurry cast/MI" et CVD. Ce document mentionne aussi des applications aérospatiales.

US 2004/191411 A1 décrit la fabrication de composites pour des pièces de turbomachines et divulgue l'infiltration d'une préforme consolidée en fibres de SiC avec une barbotine de particules de SiC recouverte de C avant une infiltration avec du Si fondu. La structure "core-shell" est obtenue par voie liquide, pas par CVI en lit fluidisé.

Les composites obtenus présentent de bonnes propriétés mécaniques mais les inventeurs ont observé une certaine variabilité dans l'allongement à rupture qui diminue la zone de tolérance aux dommages du matériau. Il est souhaitable de proposer une solution pour répondre à cet inconvénient.

### Exposé de l'invention

L'invention concerne un procédé de fabrication d'une pièce en matériau composite à matrice céramique, comprenant :
- l'infiltration d'une structure fibreuse pré-densifiée et comprenant une composition pulvérulente par une composition d'infiltration à l'état fondu comprenant du silicium afin de former une matrice céramique dans une porosité résiduelle de la structure fibreuse pré-densifiée, la structure fibreuse pré-densifiée comprenant une matrice de pré-densification comprenant du carbure de silicium et la composition pulvérulente comprenant des particules cœur-écorce comprenant un cœur en carbure de silicium et une écorce comprenant au moins une couche carbone dopé au bore avec du bore en une proportion atomique comprise entre 5% et 20%.

Les inventeurs ont constaté que la variabilité du comportement à rupture était liée à une attaque non maîtrisée du carbure de silicium de la matrice de pré-densification par le silicium fondu dans la solution de l'art antérieur. Ce phénomène peut aller jusqu'à la dégradation du renfort fibreux et de l'interphase résultant en une diminution du caractère structural du composite. L'invention répond à cet inconvénient en proposant une fonctionnalisation de la composition pulvérulente en utilisant des particules cœur-écorce (« core-shell » ou encore cœur-coquille) telles que décrites plus haut qui permettent de réduire l'attaque du carbure de silicium de la matrice de pré-densification. La composition pulvérulente est répartie de manière homogène dans la structure fibreuse pré-densifiée pour apporter une protection dans tout son volume et tout au long de l'infiltration. On obtient ainsi des matériaux composites avec un comportement à rupture bien plus performant.

Dans un exemple de réalisation, le procédé comprend en outre la fabrication des particules cœur-écorce, avant l'infiltration, par formation de l'écorce autour du cœur par dépôt chimique en phase vapeur en lit fluidisé.

Les conditions de formation de l'écorce mises en œuvre lors du dépôt chimique en phase vapeur permettent avantageusement de produire une désoxydation de la surface du cœur de carbure de silicium par réduction sans croissance notable des tailles de cristallites et conduiront ainsi à un meilleur mouillage par le silicium fondu sans favoriser l'attaque du carbure de silicium de pré-densification. A l'issue de la consommation du carbone de l'écorce, la montée capillaire ne sera pas gênée par une non mouillabilité, du fait de la désoxydation préalable des cœurs de carbure de silicium.

Selon l'invention, l'écorce des particules comprend une couche en carbone dopé au bore avec du bore en une proportion atomique comprise entre 5% et 20%.

Cette caractéristique permet de protéger davantage encore le carbure de silicium sous-jacent et d'apporter une protection dans tout le volume de la structure pré-densifiée et tout au long de l'infiltration, ce qui améliore davantage encore le comportement à rupture du matériau composite obtenu.

En particulier, l'écorce des particules peut comprendre une première couche en carbone dopé au bore avec du bore en une proportion atomique comprise entre 5% et 20%, et une deuxième couche en carbone pouvant recouvrir la première couche. On ne sort néanmoins pas du cadre de l'invention lorsque l'écorce est monocouche avec une couche en carbone dopé au bore avec du bore en une proportion atomique comprise entre 5% et 20%.

Dans un exemple de réalisation, la composition d'infiltration comprend du bore.

Une telle caractéristique permet avantageusement de protéger davantage encore le carbure de silicium sous-jacent.

Dans un exemple de réalisation, l'écorce des particules présente une épaisseur comprise entre 5 nm et 300 nm, par exemple comprise entre 100 nm et 150 nm. Une telle caractéristique permet d'obtenir un bon compromis entre une protection efficace du carbure de silicium de pré-densification durant l'infiltration, sans pénaliser la taille des particules de sorte à ne pas affecter leur capacité d'introduction dans la porosité de la structure fibreuse.

Dans un exemple de réalisation, la structure fibreuse pré-densifiée comprend en outre une interphase de nitrure de bore entre un renfort fibreux et la matrice de pré-densification.

La présence d'une interphase de nitrure de bore permet avantageusement de dévier les fissures qui peuvent apparaître dans la matrice de la pièce composite en fonctionnement de sorte à préserver le renfort fibreux.

Dans un exemple de réalisation, la structure fibreuse comprend un renfort fibreux formé par tissage tridimensionnel ou à partir d'une pluralité de strates fibreuses bidimensionnelles.

Dans un exemple de réalisation, la pièce est une pièce de turbomachine.

La pièce peut être une pièce de turbine, par exemple une pièce de turbine de moteur d'aéronef. La pièce peut par exemple être une aube de turbomachine, un secteur d'anneau de turbine ou un distributeur.

### Brève description des dessins

[Fig. 1] La figure 1 est un ordinogramme montrant une succession d'étapes d'un exemple de procédé selon l'invention.
[Fig. 2] La figure 2 représente, de manière schématique et partielle, une particule cœur-écorce utilisable dans le cadre de l'invention.
[Fig. 3] La figure 3 fournit des clichés obtenus par microscopie électronique à transmission des particules avant et après formation de l'écorce.
[Fig. 4] La figure 4 représente, de manière schématique et partielle, une variante de particule cœur-écorce utilisable dans le cadre de l'invention.

### Description des modes de réalisation

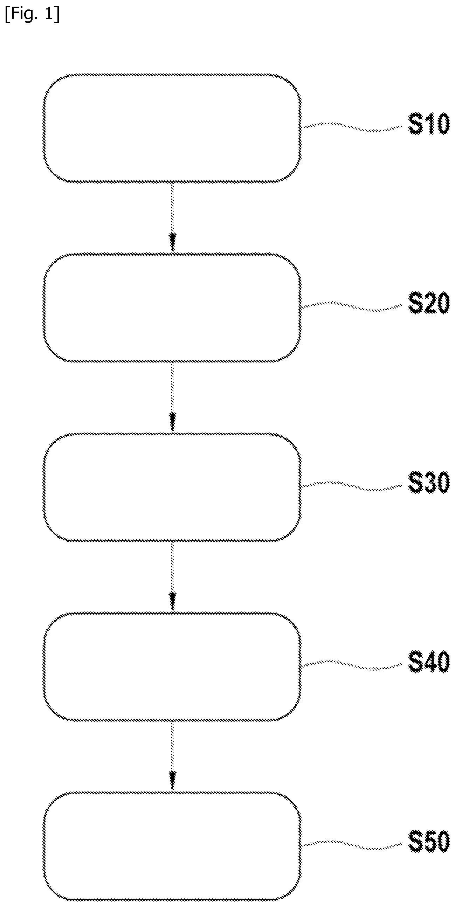

Un exemple de procédé de fabrication d'une pièce en matériau CMC selon l'invention va maintenant être décrit en lien avec l'ordinogramme de la figure 1.

Une première étape S10 du procédé peut consister à former la structure fibreuse par mise en œuvre d'une ou plusieurs opérations textiles, comme un tissage tridimensionnel. La structure fibreuse peut être formée de fils céramiques, par exemple de fils en carbure de silicium. La structure fibreuse peut constituer le renfort fibreux de la pièce en matériau composite à obtenir. Des exemples de fils en carbure de silicium utilisables peuvent être des fils « Nicalon », « Hi-Nicalon », « Hi-Nicalon-S » ou Tyranno SA3 de la société UBE Industries. Les fils céramiques de la structure fibreuse peuvent présenter une teneur en oxygène inférieure ou égale à 1% en pourcentage atomique. Les fils « Hi-Nicalon-S », par exemple, présentent une telle caractéristique. Par « tissage tridimensionnel » ou « tissage 3D », il faut comprendre un mode de tissage par lequel certains au moins des fils de chaine lient des fils de trame sur plusieurs couches de trame. Une inversion des rôles entre chaine et trame est possible dans le présent texte et doit être considérée comme couverte aussi par les revendications. La structure fibreuse peut par exemple présenter une armure interlock. Par « armure ou tissu interlock », il faut comprendre une armure de tissage 3D dont chaque couche de fils de chaîne lie plusieurs couches de fils de trame avec tous les fils de la même colonne de chaîne ayant le même mouvement dans le plan de l'armure. Il est aussi possible de partir de textures fibreuses telles que des tissus bidimensionnels ou des nappes unidirectionnelles, et d'obtenir la structure fibreuse par drapage de telles textures fibreuses sur une forme. Ces textures peuvent éventuellement être liées entre elles par exemple par couture ou implantation de fils pour former la structure fibreuse.

Dans une étape S20, on peut former une interphase de défragilisation par infiltration chimique en phase vapeur (« Chemical Vapor Infiltration ») sur les fils de la structure fibreuse. La structure fibreuse peut être positionnée dans un outillage de conformation permettant de la mettre à la forme de la pièce à obtenir durant le dépôt de l'interphase. L'épaisseur de l'interphase peut par exemple être comprise entre 10 nm et 1000 nm, et par exemple entre 200 nm et 500 nm. Après formation de l'interphase, la structure fibreuse reste poreuse, la porosité accessible initiale n'étant comblée que pour une partie minoritaire par l'interphase. L'interphase peut être monocouche ou multicouches. L'interphase peut comporter au moins une couche de carbone pyrolytique (PyC), de nitrure de bore (BN), de nitrure de bore dopé au silicium (BN(Si), avec du silicium en une proportion massique comprise entre 5% et 40%, le complément étant du nitrure de bore) ou de carbone dopé au bore (BC, avec du bore en une proportion atomique comprise entre 5% et 20%, le complément étant du carbone). L'interphase a ici une fonction de défragilisation du matériau composite qui favorise la déviation de fissures éventuelles parvenant à l'interphase après s'être propagées dans la matrice, empêchant ou retardant la rupture de fibres par de telles fissures. En variante, on notera qu'il est possible de former l'interphase sur les fils avant la formation de la structure fibreuse, c'est-à-dire avant mise en œuvre de l'étape S10.

Il est ensuite réalisé une étape S30 de formation d'un dépôt de carbure de silicium. Cette étape S30 peut être séparée en deux phases. Lors de la première phase, la structure fibreuse est toujours dans l'outillage de conformation et une couche de consolidation de carbure de silicium est déposée sur l'interphase et le renfort fibreux. La couche de consolidation peut être déposée au contact de l'interphase. Cette couche a une épaisseur suffisante pour lier suffisamment les fibres de sorte que la structure conserve sa forme sans assistance de l'outillage de maintien. Cette couche apporte une protection à l'interphase vis-à-vis de l'oxydation et peut être formée par infiltration chimique en phase vapeur de manière connue en soi, par exemple à partir d'une phase gazeuse comprenant du méthyltrichlorosilane (MTS) et de l'hydrogène (H₂). L'épaisseur de la couche de consolidation peut être supérieure ou égale à 0,1 µm, par exemple comprise entre 0,1 µm et 5 µm. Lors de la deuxième phase, la structure fibreuse consolidée et mise à la forme de la pièce à obtenir peut être retirée de l'outillage et la formation de la matrice de pré-densification peut être formée en déposant une couche de carbure de silicium. Cette couche peut être déposée au contact de la couche de consolidation. L'épaisseur de cette couche peut être supérieure à l'épaisseur de la couche de consolidation. Cette couche de carbure de silicium apporte une large contribution de performance mécanique au matériau composite et apporte une protection vis-à-vis du silicium fondu mis en œuvre lors de l'infiltration ultérieure. L'épaisseur de cette couche peut être supérieure ou égale à 1 µm, par exemple comprise entre 1 µm et 20 µm. Comme pour la couche de consolidation, la couche de la matrice de pré-densification peut être formée par infiltration chimique en phase vapeur de manière connue en soi. Selon une variante non illustrée, la couche de consolidation pourrait être omise et l'on pourrait directement former la matrice de pré-densification sur l'interphase.

**Le taux volumique** de porosité résiduelle de la structure fibreuse pré-densifiée obtenue suite à l'étape S30 peut être compris entre 20% et 40%, par exemple compris entre 30% et 35%.

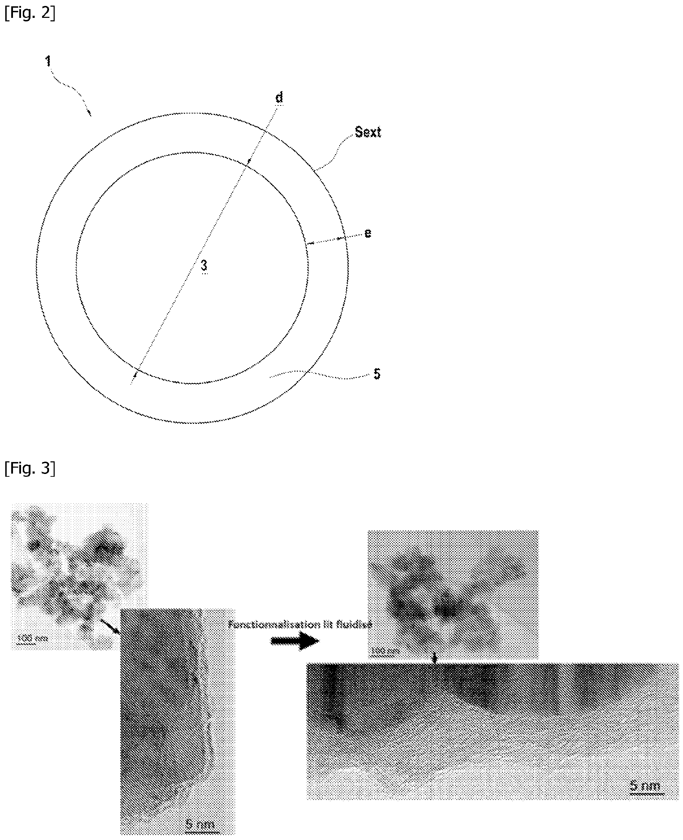

Le procédé se poursuit par introduction d'une composition pulvérulente dans une porosité résiduelle de la structure pré-densifiée (étape S40). Cette composition pulvérulente peut être introduite dans la structure fibreuse par voie barbotine (« slurry-cast ») de manière connue en soi. La composition pulvérulente est remarquable en ce qu'elle comprend des particules 1 cœur-écorce qui vont à présent être décrites. La particule 1 comprend un cœur 3 en carbure de silicium et une écorce formée par une couche 5, distincte du cœur 3, et qui entoure ce dernier. L'écorce 5 est en carbone dopé au bore avec du bore en une proportion atomique comprise entre 5% et 20%. L'écorce 5 définit une surface externe Sₑₓₜ de la particule 1. L'écorce 5 est ici mono-couche. L'écorce 5 s'étend de la surface Sₑₓₜ jusqu'au cœur 3 dans l'exemple illustré. L'écorce 5 enrobe entièrement le cœur 3. La particule 1 peut avoir une taille inférieure ou égale à 5 µm, par exemple inférieure ou égale à 1 µm. La taille d du cœur 3 des particules 1 peut être comprise entre 0,5 µm et 4 µm. L'épaisseur e de l'écorce 5 peut être comprise entre 5 nm et 300 nm, par exemple entre 100 nm et 150 nm. La particule 1 peut avoir une forme de grain, ayant par exemple une forme sensiblement sphérique ou ellipsoïdale. La figure 2 illustre le cas d'une particule 1 bi-matière où la particule 1 est constituée essentiellement par un cœur 3 en carbure de silicium et d'une région 5, au contact du cœur 3, en carbone dopé au bore. Comme indiqué plus haut, la particule 1 peut être obtenue par formation de l'écorce 5 sur le cœur 3 par dépôt chimique en phase vapeur en lit fluidisé. Les inventeurs ont mis en œuvre les conditions opératoires ci-dessous pour fabriquer de telles particules 1 lesquelles sont fournies à titre d'exemple.

Une charge de 250 grammes de poudre de carbure de silicium a été mise en fluidisation sous 400 mbars avec un débit d'azote de 1000 centimètre cube standard par minute (« sccm »). Le lit fluidisé a été porté à 1000°C puis il a été exposé à un flux de propane de 200 centimètre cube standard par minute pendant 5 heures. Des analyses MET en Haute Résolution (voir figure 3) montrent que les grains de la poudre sont initialement recouverts d'une fine couche amorphe nanométrique, vraisemblablement de silice. Après le traitement décrit ci-avant, les grains de SiC sont recouverts individuellement d'un dépôt fin de carbone sp2. Le carbone est en contact direct avec la surface SiC, la couche amorphe a disparu.

Le taux volumique de porosité résiduelle de la structure fibreuse pré-densifiée et chargée par la composition pulvérulente peut être inférieur ou égal à 25%, par exemple compris entre 15% et 25%.

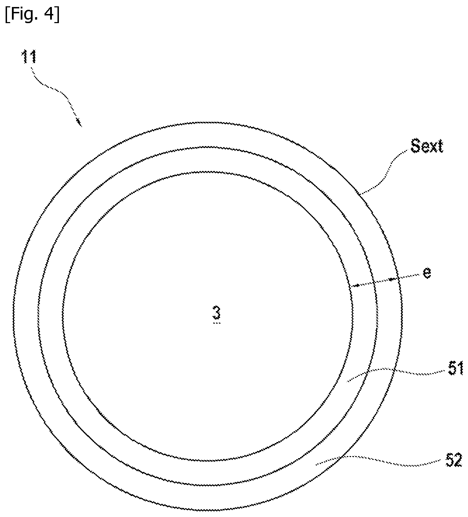

La figure 2 illustre une particule 11 à écorce 5 mono-couche mais l'on peut en variante mettre en œuvre une particule à écorce bi-couches comprenant par exemple une première couche 51 en carbone dopé au bore qui entoure le cœur 3 et une deuxième couche 52 en carbone qui entoure la première couche, comme illustré à la figure 4.

Une fois la composition pulvérulente introduite, on réalise l'étape S50 durant laquelle on infiltre la porosité résiduelle avec une composition d'infiltration à l'état fondu comprenant au moins du silicium de manière à former une matrice céramique dans la porosité de la structure fibreuse. La formation de cette matrice céramique peut permettre de finaliser la densification de la pièce. Cette étape d'infiltration correspond à une étape d'infiltration à l'état fondu. La composition d'infiltration peut être constituée de silicium pur fondu ou en variante être sous la forme d'un alliage fondu de silicium et d'un ou plusieurs autres constituants. La composition d'infiltration peut comprendre majoritairement en masse du silicium, c'est-à-dire présenter une teneur massique en silicium supérieure ou égale à 50%. La composition d'infiltration peut par exemple présenter une teneur massique en silicium supérieure ou égale à 75%. Le(s) constituant(s) présent(s) au sein de l'alliage de silicium peuvent être choisi(s) parmi B, Al, Mo, Ti, Ge et leurs mélanges. Lorsque la composition pulvérulente comprend des particules de carbone en plus des particules cœur-écorce, une réaction chimique peut se produire entre la composition d'infiltration et ces particules de carbone lors de l'infiltration aboutissant à la formation de carbure de silicium. Une réaction se produit également avec le carbone de l'écorce.

Après l'étape S50, on obtient une pièce en matériau CMC. Une telle pièce en matériau CMC peut être une pièce statique ou rotative de turbomachine. Des exemples de pièces de turbomachine ont été mentionnés plus haut. Une telle pièce peut en outre être revêtue d'un revêtement de barrière environnementale ou thermique avant son utilisation.

L'expression « compris(e) entre ... et ... » doit se comprendre comme incluant les bornes.

## Revendications

1. Procédé de fabrication d'une pièce en matériau composite à matrice céramique, comprenant :
- l'infiltration (S50) d'une structure fibreuse pré-densifiée et comprenant une composition pulvérulente par une composition d'infiltration à l'état fondu comprenant du silicium afin de former une matrice céramique dans une porosité résiduelle de la structure fibreuse pré-densifiée, la structure fibreuse pré-densifiée comprenant une matrice de pré-densification comprenant du carbure de silicium et la composition pulvérulente comprenant des particules (1 ; 11) cœur-écorce comprenant un cœur (3) en carbure de silicium et une écorce comprenant au moins une couche (5 ; 51 ; 52) en carbone dopé au bore avec du bore en une proportion atomique comprise entre 5% et 20%.

2. Procédé selon la revendication 1, dans lequel le procédé comprend en outre la fabrication des particules (1) cœur-écorce, avant l'infiltration, par formation de l'écorce autour du cœur (3) par dépôt chimique en phase vapeur en lit fluidisé.

3. Procédé selon la revendication 1 ou 2, dans lequel l'écorce des particules comprend une première couche (51) en carbone dopé au bore avec du bore en une proportion atomique comprise entre 5% et 20%, et une deuxième couche (52) en carbone recouvrant la première couche.

4. Procédé selon l'une quelconque des revendications 1 à 3, dans lequel la composition d'infiltration comprend du bore.

5. Procédé selon l'une quelconque des revendications 1 à 4, dans lequel la structure fibreuse pré-densifiée comprend en outre une interphase de nitrure de bore entre un renfort fibreux et la matrice de pré-densification.

6. Procédé selon l'une quelconque des revendications 1 à 5, dans lequel la structure fibreuse comprend un renfort fibreux formé par tissage tridimensionnel ou à partir d'une pluralité de strates fibreuses bidimensionnelles.

7. Procédé selon l'une quelconque des revendications 1 à 6, dans lequel la pièce est une pièce de turbomachine.

## Patentansprüche

1. Verfahren zur Herstellung eines Teils aus Verbundmaterial mit keramischer Matrix, umfassend:
- die Infiltration (S50) eines Fasergebildes, das vorverdichtet wurde und eine pulverförmigen Zusammensetzung umfasst, mit einer Infiltrations-Zusammensetzung im geschmolzenen Zustand, die Silizium umfasst, um eine keramische Matrix in einer verbleibenden Porosität des vorverdichteten Fasergebildes zu bilden, wobei das vorverdichtete Fasergebilde eine Siliziumkarbid umfassende Vorverdichtungs-Matrix und die pulverförmige Zusammensetzung umfasst, die Kern-Schale-Partikel (1; 11) umfasst, die einen Kern (3) aus Siliziumkarbid und eine Schale umfassen, die zumindest eine Schicht (5; 51; 52) aus mit Bor dotiertem Kohlenstoff umfasst, mit dem Bor in einem atomaren Anteil zwischen 5 % und 20 %.

2. Verfahren nach Anspruch 1, wobei das Verfahren ferner die Herstellung der Kern-Schale-Partikel (1) vor der Infiltration durch Bildung der Schale um den Kern (3) herum durch chemische Abscheidung in der Dampfphase in der Wirbelschicht umfasst.

3. Verfahren nach Anspruch 1 oder 2, wobei die Schale der Partikel eine erste Schicht (51) aus mit Bor dotiertem Kohlenstoff, mit dem Bor in einem atomaren Anteil zwischen 5 % und 20 %, und eine zweite Schicht (52) aus Kohlenstoff umfasst, welche die erste Schicht bedeckt.

4. Verfahren nach einem der Ansprüche 1 bis 3, wobei die Infiltrations-Zusammensetzung Bor umfasst.

5. Verfahren nach einem der Ansprüche 1 bis 4, wobei das vorverdichtete Fasergebilde ferner eine Zwischenphase aus Bornitrid zwischen einer Faserverstärkung und der Vorverdichtungs-Matrix umfasst.

6. Verfahren nach einem der Ansprüche 1 bis 5, wobei das Fasergebilde eine Faserverstärkung umfasst, die durch dreidimensionale Verwebung oder ausgehend von mehreren zweidimensionalen Faserschichten gebildet wird.

7. Verfahren nach einem der Ansprüche 1 bis 6, wobei das Teil (1) ein Teil einer Turbomaschine ist.

## Claims

1. A process for manufacturing a ceramic matrix composite part, comprising:
- infiltrating (S50) a pre-densified fibrous structure comprising a powder composition with a molten infiltration composition comprising silicon, in order to form a ceramic matrix in a residual porosity of the pre-densified fibrous structure, the pre-densified fibrous structure comprising a pre-densification matrix comprising silicon carbide, and the powder composition comprising core-shell particles (1; 11) having a silicon carbide core (3) and a shell having at least one layer (5; 51; 52) of boron-doped carbon containing boron at an atomic proportion of between 5% and 20%.

2. The process according to claim 1, wherein the process further comprises the manufacturing of core-shell particles (1), before the infiltration, by forming the shell around the core (3) by fluidised bed chemical vapour deposition.

3. The process according to claim 1 or 2, wherein the shell of the particles comprises a first layer (51) made of boron-doped carbon containing boron at an atomic proportion of between 5% and 20%, and a second layer (52) made of carbon covering the first layer.

4. The process according to any one of claims 1 to 3, wherein the infiltration composition comprises boron.

5. The process according to any one of claims 1 to 4, wherein the pre-densified fibrous structure further comprises an interphase of boron nitride between a fibrous reinforcement and the pre-densification matrix.

6. The process according to any one of claims 1 to 5, wherein the fibrous structure comprises a fibrous reinforcement formed by three-dimensional weaving or from a plurality of two-dimensional fibrous strata.

7. The process according to any one of claims 1 to 6, wherein the part is a turbomachine part.
